# EUROPEAN PATENT SPECIFICATION

(11) **EP 2 399 477 B1**
(45) Date of publication and mention of the grant of the patent: **29.10.2014**
(21) Application number: 11171535.5
(22) Date of filing: 27.06.2011
(51) Int. Cl.: A44B 11/25, B60R 22/48

(54) **Seatbelt buckle assembly**
Sitzgurtschnallenanordnung
Ensemble de boucle de ceinture de sécurité

(30) Priority: 28.06.2010 GB 201010782
(43) Date of publication of application: 28.12.2011
(73) Proprietor: Nissan Motor Manufacturing (UK) Ltd., Cranfield Bedfordshire MK43 0DB (GB)
(72) Inventor: Mitchell, Simon, Cranfield, Bedfordshire MK430DB (GB)

(56) References cited:
- DE-U1-202007 003 806
- GB-A- 2 046 972
- US-A- 3 840 849
- US-A- 4 359 236
- US-A- 4 537 274

## Description

### Field of the invention.

The invention is concerned with occupant restraint devices in a vehicle and particularly, but not exclusively, to seatbelt buckle assemblies for a seatbelt type restraint device for a passenger or commercial vehicle. Aspects of the invention relate to an assembly, to a system, to a seat, and to a vehicle.

### Background of the invention.

Most modern vehicles, such as passenger cars, intended for use on public roads are fitted with seatbelts, arranged to restrain a seated occupant during sudden changes in vehicle movement such as heavy braking; or in the event of a vehicle collision. These devices are intended to manage the movement of the occupant within the vehicle during such an event, mitigating the risk of occupant injury.

Typically, a seatbelt system comprises a length of webbing, a tongue secured to the webbing and a buckle arranged for releasable engagement with the tongue. The seatbelt system generally uses at least one length of webbing material, typically formed from a woven polymer such as polyester or nylon. The two ends of the length of webbing are secured to the vehicle or to the vehicle seat, with one end rigidly secured via a mounting bracket to the vehicle body or seat and the other end commonly secured to the vehicle or seat via a spring-biased spool known as a retractor.

The layout of the seatbelt system relative to a seated occupant is usually arranged with the seatbelt webbing secured by the mounting bracket and retractor at locations to one side of the seating position. The bracket and retractor are typically arranged so that one of the bracket or retractor is located near the vehicle floor whilst the other is mounted adjacent the top of the vehicle seat. The seatbelt buckle is typically located adjacent the pelvis of the seated occupant on the opposite side of the occupant to the retractor and mounting bracket.

In use, the seated occupant pulls the tongue fixed to the webbing across their body, causing the retractor to pay out a portion of webbing stored thereon, sufficient to allow the occupant to insert the tongue into the buckle and to engage it therewith. The result of this action causes a portion of the seatbelt webbing to lie across the lap of the occupant, and another portion of the webbing to lie diagonally across their chest. The mounting bracket, retractor and buckle provide three points of anchorage for the occupant to the vehicle and, with the webbing secured across their body, will restrain the occupant within the vehicle until the tongue is disengaged or unlatched from the buckle.

In recent years, it has become common for seatbelt systems for the front seats of a vehicle to further comprise a seatbelt reminder system. The seatbelt reminder system typically comprises a switch or proximity sensor such as a Hall-effect sensor, located in the seatbelt buckle and arranged to detect when the seatbelt tongue is latched securely within the buckle. The seatbelt reminder system further comprises means for notifying the vehicle driver of the latched status of the seatbelts for both the driver and the front passenger(s), where appropriate. Typically, the driver is notified when a front passenger has failed to correctly latch their seatbelt tongue into the seatbelt buckle; and thus is not restrained by their seatbelt. This notification may be achieved by means of a visual and/or audible warning such as a warning lamp and/or buzzer.

The seatbelt buckles used for the front seats of a passenger vehicle are typically secured to the vehicle body, either directly or via a rigid frame within the vehicle seat by means of a mounting bracket. This mounting bracket is usually formed from a stamped steel strip or sheet. As this support is rigid, it is relatively simple to secure an electrical cable to the rigid support by means of clips, cable ties or other suitable means. The electrical cable is required to connect the sensor in the buckle head to the vehicle as part of the seatbelt reminder system. However, seatbelt buckles fitted to the rear seats of passenger cars are often secured to the vehicle body or seat frame by via a flexible anchorage means, typically via a loop of woven webbing material. The flexibility provided by this anchorage means allows the buckle head to lie flat against the seat when not in use, allowing the seat to be folded by the user to increase the cargo space; or to provide seating for additional occupants as required. A flexibly mounted seatbelt buckle may also aid the installation of a child restraint system (CRS) such as a child seat, which may demand a different seatbelt geometry and routing to correctly install the CRS than when the seat belt is used to restrain an adult occupant.

Where a vehicle manufacturer wishes to offer a seatbelt reminder system for rear seat occupants, the seatbelt buckle must either be mounted rigidly to the vehicle seat frame in a manner similar to that used to mount front seat belt buckles, or the electrical cable for the buckle sensor must be secured to the flexible anchorage means. Rigid mounting of the buckle to the seat frame restricts the seat design and imposes significantly greater constraints on the packaging of the seat and adjacent vehicle body. Flexible mounting of the buckle demands a robust and flexible electrical cable, which must be capable of withstanding repeated bending in use.

A known method of securing the cable to the webbing loop is disclosed in DE202007003806U. This method uses a plurality of clips or cable ties, which grip a portion of the webbing, securing the cable thereto. However, it is difficult to secure the cable to a flexible mounting means, such as a loop of woven webbing, in such a way as to be comfortable to the user and aesthetically pleasing. If the cable is exposed it may be prone to accidental damage during the installation of a CRS, especially if the CRS is to be secured to the vehicle via ISOfix or LATCH anchorages. Such anchorages may inadvertently snag and potentially damage the cable during installation of the child seat to the vehicle.

A known solution is to enclose the cable within a portion of the webbing loop by placing a part of the cable within the loop and stitching the loop together around that part of the cable, as disclosed in US 3,840,849. However, this solution is expensive and requires accurate sewing, often achieved by performing the stitching operation manually. Furthermore, some means must be found to make an external connection to an enclosed cable. US 3,840,849 is notably silent on this matter. Finally, the thickness of conductors 23 disclosed in US 3,840,849 implies a degree of inflexibility, which could restrict the utility of the anchor section of the belt in an application to a folding (rear or middle row) seat.

It is against this background that the present invention has been conceived. It is an aim of the present invention to address the issue of providing a rear seat seatbelt reminder, whilst minimising the chance for accidental damage to the electrical cable between the buckle sensor and the vehicle. In addition, the present invention offers a reduction in parts complexity compared to known systems, whilst facilitating manufacture of the seatbelt buckle and the assembly of said buckle to a vehicle. Aspects and embodiments of the invention may provide a seatbelt buckle assembly for a vehicle occupant restraint system and a method of assembling the same. This approach greatly improves the packaging and effectiveness of the seatbelt buckle assembly whilst reducing assembly time and cost. Other aims and advantages of the invention will become apparent from the following description, claims and drawings.

### Summary of the invention.

According to an aspect of the present invention, there is provided a seatbelt buckle assembly for a seatbelt system of a vehicle, the seatbelt buckle assembly comprising: a buckle head, for accommodating at least a portion of a seatbelt tongue; latching means, for selectively engaging said seatbelt tongue; an anchor bracket; a buckle sensor at least partly enclosed by the buckle head; and a woven webbing loop, arranged to secure the buckle head to the anchor bracket, wherein the buckle sensor is arranged to communicate electrically with said vehicle by an electrical connector mounted to the anchor bracket via at least one electrical conductor integrally woven through the webbing loop, and electrical contacts mounted on the buckle head and on the anchor bracket respectively; characterized in that said contacts are located and oriented so that a latching of the seatbelt tongue into the buckle head, and a subsequent initial tensioning of the seatbelt, act to bring said contacts into alignment with, and contact with, the electrical conductors.

Advantageously, the present invention negates the use of a clipped or enclosed sensor cable or harness used in known seatbelt buckle assemblies, reducing parts complexity, assembly time, and associated costs. In addition, the present invention offers an improved means for electrically connecting the buckle sensor to the vehicle during vehicle assembly; and produces a seatbelt buckle assembly with enhanced perceived quality and overall system reliability.

In an example, the contacts are mounted on distal (as opposed to proximal) sides of adjacent components of the anchor bracket and buckle head. The adjacent components may be elongated metal loops.

In an example, the anchor bracket is arranged to secure the seatbelt buckle assembly to a load-bearing structure such as a vehicle body or a vehicle seat. In a further example, the buckle head comprises a latch channel having an aperture, configured to cooperate with the webbing loop; and said latching means is at least partly supported by the latch channel.

In an example, the latch channel is further provided with an electrical contact assembly, arranged to electrically connect the buckle sensor to the electrical conductor integrated into the webbing loop.

In an example, the electrical contact assembly is supported by, and is in cooperation with, the aperture in the latch channel.

In an example, the electrical contact assembly is arranged to provide at least one surface with which to contact a portion of the webbing loop in cooperation with said aperture.

Advantageously, the cooperation between the electrical contact assembly and the aperture in the latch channel, through which a portion of the webbing loop is passed to secure the buckle head to the anchor bracket, ensures that the conductor in the webbing is in contact with the electrical contact assembly whenever the seatbelt is in use. This arrangement of electrical contact assembly, latch channel and webbing loop avoids the need for any specialist assembly techniques or tooling to assemble the seatbelt buckle assembly of the present invention. In addition, the provision of an electrical contact assembly supported by the latch channel, greatly enhances the assembly time and reliability of the seatbelt buckle assembly. In the present invention, the connection between the buckle sensor and the electrical conductor in the webbing loop is not placed under physical stress or repetitive bending in use. Furthermore, the tension of the seatbelt across the user's body will tend to secure and maintain the electrical connections for the seatbelt reminder assembly, as the webbing loop is held in tension. This reduces the chances of false warnings indicating that the seatbelt is undone.

In an example, the anchor bracket comprises an aperture, configured to cooperate with the webbing loop; and an electrical contact assembly.

In an example, the electrical contact assembly is supported by, and is in cooperation with, the aperture in the anchor bracket; and is arranged to provide at least one surface with which to contact a portion of the webbing loop in cooperation with said aperture.

In an example, the electrical contact assembly in cooperation with the aperture in the anchor bracket comprises means for automatically connecting said contact assembly to a vehicle wiring harness upon securing the anchor bracket to a vehicle body or seat.

In an example, the means for electrically connecting the contact assembly in cooperation with the aperture in the anchor bracket to a vehicle wiring harness comprises an electrical connector integrally formed with said contact assembly.

Advantageously, the anchor bracket and electrical contact assembly employs the same method for electrically connecting the conductor in the webbing with the vehicle as is employed between the sensor in the buckle head and the webbing, reducing parts complexity and assembly time. The cooperation between the electrical contact assembly and the aperture in the anchor bracket, through which a portion of the webbing loop is passed to secure the buckle head to the anchor bracket, ensures that the conductor in the webbing is in physical and electrical contact with the electrical contact assembly whenever the seatbelt buckle is in use. Additionally, the provision of an electrical contact assembly and means for connecting electrically to a vehicle wiring harness, supported by the anchor bracket, greatly enhances the assembly time and reliability of the seatbelt buckle assembly. In the present invention, the connection between the buckle sensor and the vehicle wiring harness is not placed under undue physical stress in use. Additionally, any relative movement between the buckle head and the anchor bracket is accommodated by the flexibility provided by the woven webbing loop. This improves the robustness of the system, and its resistance to conductor failure as a result of repetitive bending, compared with a traditional buckle sensor harness cable clipped to the edge of a webbing loop.

In an example, the latching means is configured to selectively engage with a portion of said tongue to restrain a vehicle occupant in use.

In an example, the buckle sensor is configured to detect the engagement of said seatbelt tongue with said latching means.

In an example, the buckle sensor is integrally formed with the electrical contact assembly in cooperation with the latch channel.

Advantageously, the buckle sensor may be a contact sensor arranged to make direct contact with a portion of the seatbelt tongue when the tongue is securely latched within the buckle head. Alternatively, the buckle sensor may be a noncontact type or proximity sensor such as a Hall-effect sensor, configured to determine the latched state of the tongue within the buckle head. The buckle sensor is arranged to communicate information about the latched state of the seatbelt tongue to the occupants of the vehicle via an audible and/or visual warning, integrated into the vehicle as part of a seatbelt reminder system.

According to another aspect of the present invention for which protection is sought, there is provided a vehicle seatbelt system comprising a seatbelt buckle assembly according to any of the preceding paragraphs.

According to a further aspect of the present invention for which protection is sought, there is provided a vehicle seat comprising a seatbelt buckle assembly according to any of the preceding paragraphs.

According to a yet further aspect of the present invention for which protection is sought, there is provided a vehicle comprising a seatbelt buckle assembly according to any of the preceding paragraphs.

Within the scope of this application it is envisaged that the various aspects, embodiments, examples, features and alternatives set out in the preceding paragraphs, in the claims and/or in the following description and drawings may be taken independently or in any combination thereof. In particular, features described in connection with one embodiment are applicable to the other embodiments, except where there is an incompatibility of features.

### Brief Description of the Drawings

The present invention will now be described, by way of example only, with reference to the accompanying drawings in which:
Figure 1 shows a perspective view of a known seatbelt buckle assembly with flexible mounting means;
Figure 2 shows a perspective view of the known seatbelt buckle assembly of Figure 1, further comprising an electrical cable for a buckle sensor forming part of a seatbelt reminder system;
Figure 3 shows a perspective view of a seatbelt buckle assembly embodying one form of the present invention;
Figure 4 shows an enlarged cross-section of one side of the webbing loop 15 seen in Figure 3;
Figure 5 shows detailed views of a seatbelt buckle head of the seatbelt buckle assembly of the present invention, in which:
   Figure 5a shows a partially cut-away view through a lower portion of the buckle head;
   Figure 5b shows a cross section through a latch channel located within said buckle head;
   Figure 5c shows a side view of the buckle sensor, conductors and contact elements within the contact assembly;
   Figure 5d shows an example of a first conductor layout as used in the buckle head of Figure 3; and
   Figure 5e shows an example of an alternative conductor layout as used in the buckle head of Figure 5a;
Figure 6 shows a perspective view of an example of a contact assembly of the seatbelt buckle of the present invention;
Figure 7 shows a perspective view of an anchor bracket with the contact assembly of Figure 6 attached thereto; and
Figure 8 shows a cross-section of adjacent parts of the buckle head and anchor bracket of Figure 3, and the webbing loop passing around them.

While the examples given for suitable applications for the present invention relate to seatbelt buckle assemblies for passenger vehicles, it will be appreciated by one skilled in the art that there are potentially other uses for the present invention in both vehicle and non-vehicle applications.

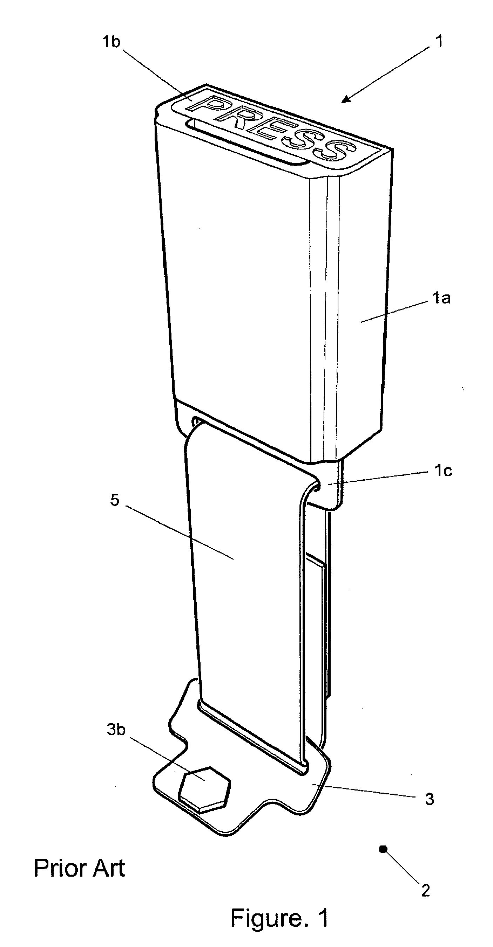

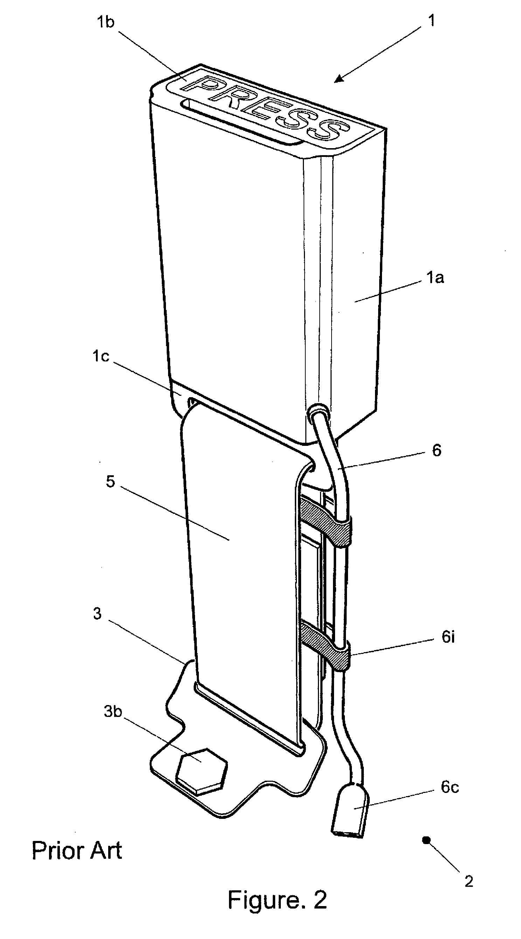

**Figure 1** and Figure 2 show examples of known seatbelt buckle assemblies 1 comprising: a buckle head 1a; a release button 1b; a latch channel 1c; a loop 5 of flexible webbing; an anchor bracket 3; and an anchor bolt 3b. Such seatbelt buckle assemblies are often used in rear seat applications in passenger vehicles such as cars, minivans and sport utility vehicles. The seatbelt buckle head 1a is held by the sewn loop of seatbelt webbing 5 to the vehicle seat or floorpan 2 by the anchor bracket 3. In use, the user inserts a tongue (not shown) into the buckle head 1 a to secure a seatbelt around their body to provide suitable restraint whilst travelling in the vehicle. Upon insertion, the tongue engages with a latch (not shown) within the buckle head 1 a, locking the tongue to the latch channel 1 c. The latch channel 1 c is flexibly secured to the vehicle by the webbing loop 5 and the anchor bracket 3.

In some vehicles, a buckle latch sensor is fitted to the rear seatbelt buckles. An example of such a buckle is shown in **Figure 2**. The buckle latch sensor (not shown) is located within the buckle head 1 a and is used by a seatbelt reminder system for the rear seat occupants. The latch sensor is arranged to detect the latched state of the tongue in the seatbelt buckle 1. The sensor may be a simple contact switch, a resistive or capacitive device or a proximity sensor such as a Hall-effect sensor. It may be seen from the Figure that the sensor is in electrical communication with the vehicle via an electrical connection provided by a sensor harness or cable 6. The sensor cable 6 is connected at one end to the latch sensor within the buckle head 1a and is provided at the other end with a harness connector 6c, arranged to connect to a vehicle wiring harness (not shown). A known problem with this arrangement is that the sensor cable 6 must be secured to the webbing loop 5, requiring additional stitching or extra parts such as clips 6i. In the example shown in Figure 2, a series of clips 6i are used to secure the cable 6 to the webbing loop 5. These clips 6i are often unsightly and are prone to snagging on the seat upholstery or on the user's clothing; and are prone to breakage in use.

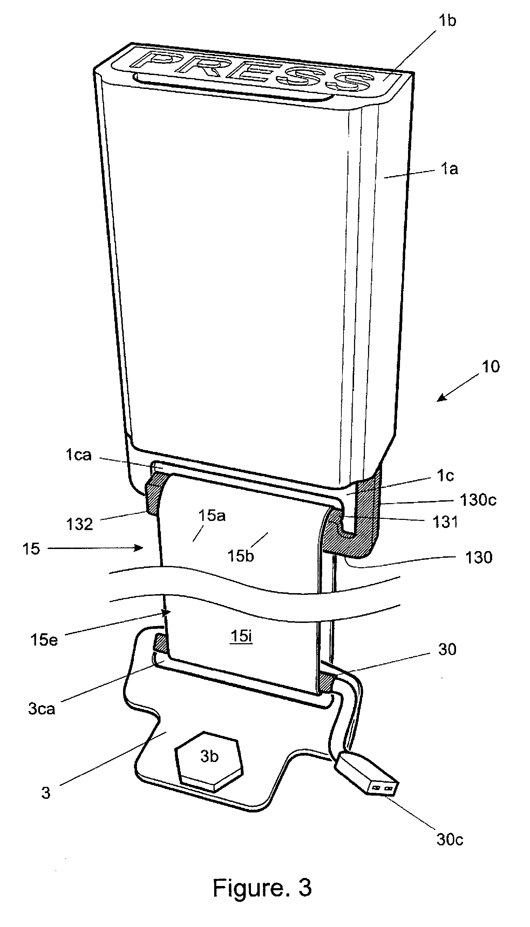

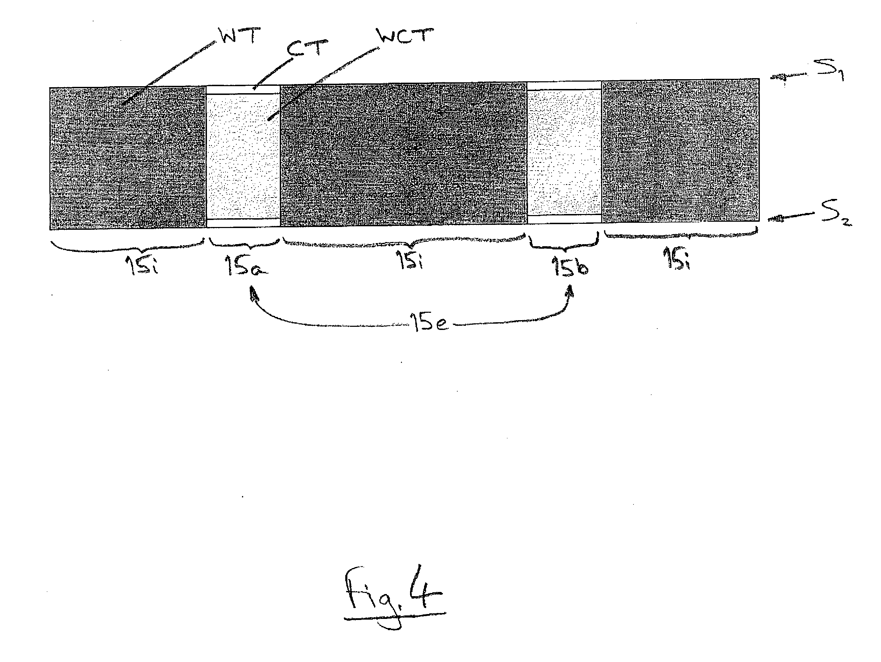

The present invention relies on a known webbing technology whereby at least one electrically conductive element is woven directly into the webbing material itself. This technology has been proposed in the past to provide an electrically heated seatbelt webbing for improved comfort in cold climates. A seatbelt buckle assembly 10 embodying one form of the present invention is shown in Figure 3 and detailed views of the component parts of the assembly 10 are provided in Figures 4 to 8.

In **Figure 3**, the seatbelt buckle assembly 10 uses a loop of webbing 15 with integrally woven conductive tracks or elements 15e to replace the sensor cable 6 shown in Figure 2. In this way, the buckle assembly 10 of the present invention may utilise a standard buckle head 1a and anchor bracket 3 flexibly joined by a loop of connective webbing 15, thus keeping component development and parts complexity to a minimum.

The electrically conductive webbing 15 shown in Figure 3 is provided with two spaced apart conductive tracks 15a, 15b running along the length of the webbing 15. The conductive tracks are spaced apart by regions of non-conductive webbing 15i, ensuring that there is no electrical connection between the conductive tracks. The conductive elements 15e are exposed on opposed surfaces of the woven webbing material and so may be accessed by direct contact, negating the need for soldered wires or crimped connectors at the end of each conductive track. Furthermore, conductive elements 15e are continuous around webbing loop 15, as opposed to having point contacts; allowing the webbing some freedom of movement without breaking connections.

In the example shown in the Figures, a loop 15 of webbing is formed by passing the webbing through a webbing aperture 1 ca in the latch channel 1 c; then through a corresponding webbing aperture 3ca in the anchor bracket 3; before the webbing is looped around until the two ends of the webbing overlap. Where the two ends of the webbing overlap, they are joined together by stitching to form the webbing loop 15 in the known manner. As the conductive elements 15e are exposed on opposing surfaces of the woven webbing material, the elements are automatically made electrically continuous as the ends of the webbing are sewn together.

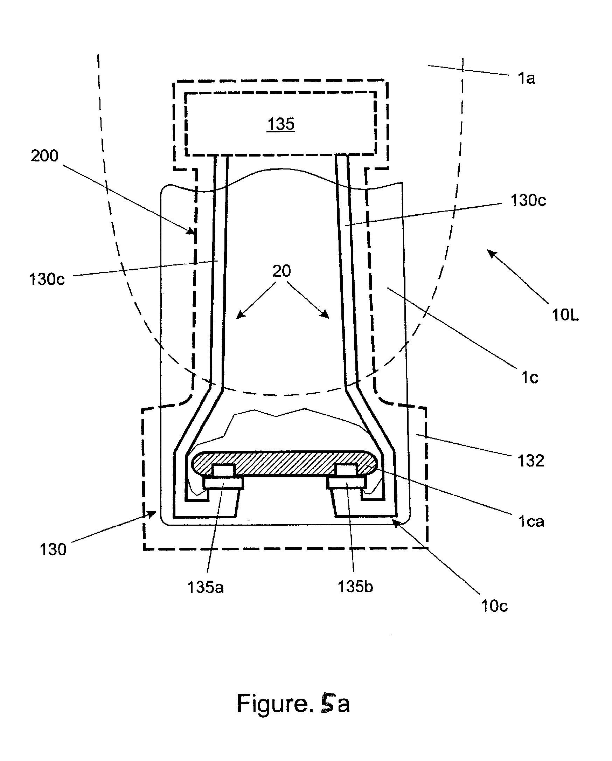

In the present invention, the webbing aperture 3ca in the anchor bracket and the webbing aperture 1ca in the latch channel 1c are lined with electrical contact assemblies 30, 130. The contact assemblies 30, 130 (shown in detail in Figures 5a to 7) comprise: an insulating body 32, 132, formed from a suitable plastics polymer or ceramic material; contact elements 35a, 35b, 135a, 135b, for making electrical contact with the conductive tracks 15a, 15b; a clipping feature 31, 131, for securing the contact assembly in the webbing apertures 1 ca, 3ca; and an integral connector 30c, 130c. The contact elements 35a and 135a work together to contact the conductive track 15a to form an electrical bridge between the anchor bracket 3 and the buckle head 1 a. Similarly, the contact elements 35b and 135b work together to contact the conductive track 15b.

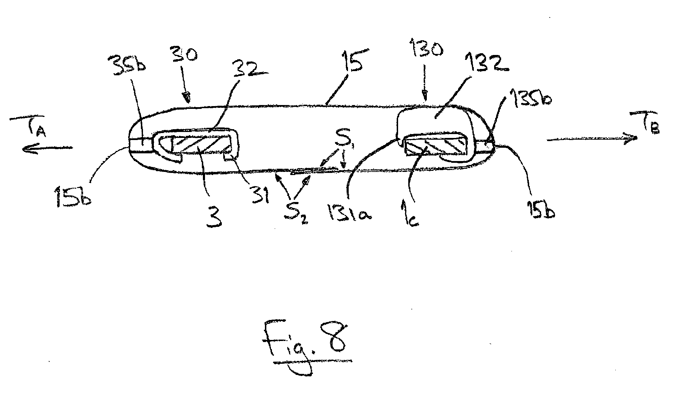

Figure 4 shows a cross-section of seatbelt webbing with conductive wires sewn in. There are three areas 15i of non-conductive webbing, which comprise only non-conductive webbing threads WT. The two conductive tracks 15a and 15b comprise a mixture WCT of ordinary, non-conductive webbing threads and conductive threads in the body of the webbing away from its outer surfaces; but at each surface of each track 15a and 15b, there is only conducting thread CT. This concentration of conducting threads at the surfaces of the webbing ensures good and reliable electrical contacts. It can be seen from this Figure, that conducting threads CT are woven through the webbing from one side S₁ of the webbing to an opposite side S₂ of the webbing. This ensures durability; unlike on-surface stitching, a thread woven through webbing cannot easily be "picked out". Furthermore, good contacts on both sides are required to ensure electrical continuity when the webbing loop 15 is sewn together (see Figure 8) ― side S₁ must be sewn to side S₂ during this process. This sewing operation is made easy by the contacts being available on both sides of the webbing, as there is no need to sew the webbing in a particular orientation; it can be looped around the anchor bracket and buckle head with either side S₁ or side S₂ on the outside.

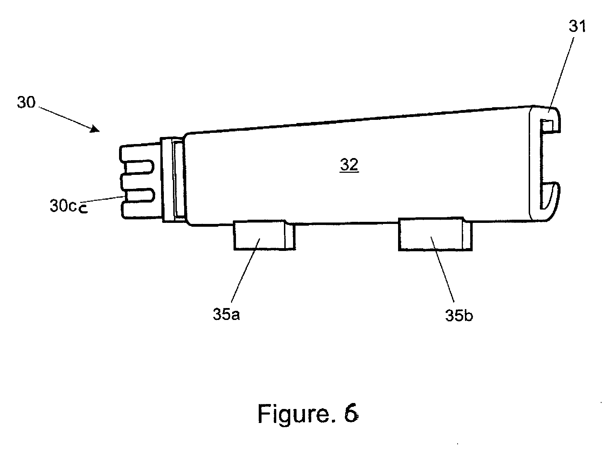

**Figure 5a** shows a lower portion 10L of a section through the buckle head 1 a, showing the latch channel 1 c and the webbing aperture 1 ca formed therein. Also shown is the contact assembly 130, secured to the latch channel 1c by the engagement of the clipping feature 131 with the periphery of the webbing aperture 1 ca. (Figure 6 shows a more compact contact assembly 30 for the anchor bracket) Figure 5a shows conductors, indicated generally at 20, connecting contact elements, indicated generally at 10c, to the latch sensor 135. The location of the latch sensor 135 is indicated in phantom in the Figure. In the example shown in Figure 5a, the conductors 20 comprise two over-moulded conductors 130c running substantially vertically from the contact elements 10c to the latch sensor 135. The conductors 130c are supported and spaced apart by a non-conductive insulating body 132 of plastics material which, in the example shown, is formed by over-moulding the conductors 20, latch sensor 135 and a base portion of the contact elements 10c. The outline of the insulating body 132 is shown with a dashed line. Over-moulding produces a unitary module 200 that may be assembled to an existing latch channel 1 c, adding seatbelt reminder functionality to an existing seatbelt system.

It will be appreciated by one skilled in the art, that the function of the conductors 20 may be performed by a ribbon cable or other substantially flat conductor as required; and that use of over-moulding to product a unitary module 200 as described above may serve to greatly reduce manual assembly time. It is envisaged that the latch channel may be added to the over-moulding process so as to produce a unitary module 200 comprising: a latch channel 1c; integrated conductors 20; a latch sensor 135; and contact elements 10c.

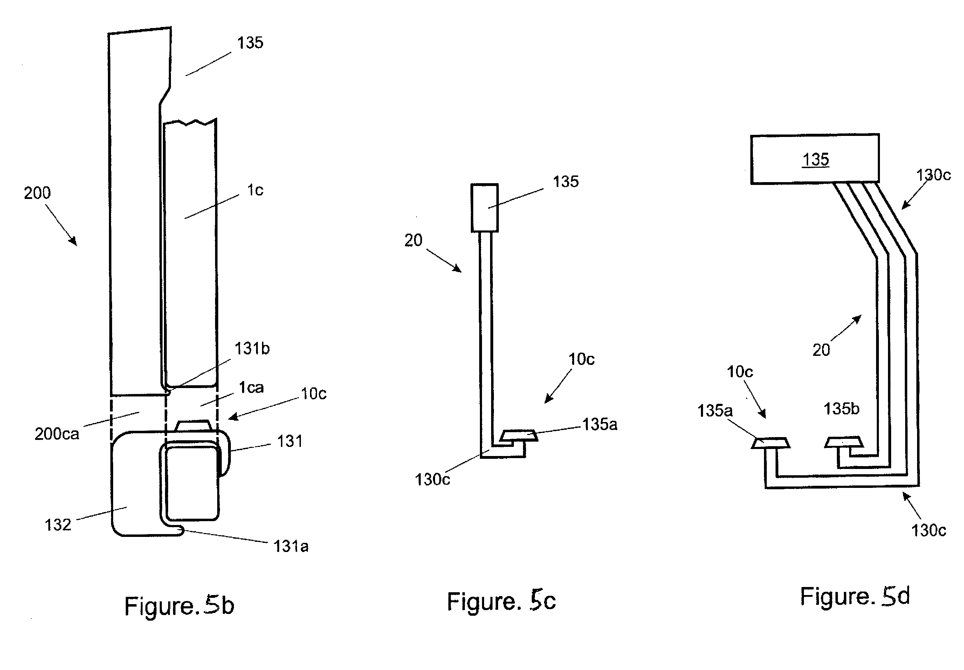

**Figure 5b** shows a cross section through the latch channel 1c located within the buckle head (not shown for clarity). In the example shown, the unitary module 200 is shown secured to the latch channel 1c by clipping features formed by lips extending from the insulating body 132. The clipping features of the example shown comprise a main lip 131, a lower lip 131 a and an upper lip 131 b, arranged to fit around the periphery of the webbing aperture 1 ca and around a lower edge of the latch channel 1c respectively. It will be appreciated that the clipping features 131, 131 a, 131 b are purely illustrative and that their function may be performed by use of heat-staking, ultra-sonic welding, adhesive bonding or by over-moulding the insulating body 132 to, or around, features of the latch channel directly.

Figure 5b also shows a webbing aperture 200ca formed in the unitary module 200 between the latch sensor 135 and the contact elements 10c. This webbing aperture 200ca is arranged to align with the corresponding webbing aperture 1ca formed in the latch channel 1c, permitting the webbing loop 15 to pass therethrough. When the unitary module 200 is correctly fitted to the latch channel 1c, the webbing apertures 1ca, 200ca are in alignment and the webbing (not shown) cooperates with the webbing apertures 1 ca, 200ca; allowing the conductive tracks in the webbing to be in permanent contact with the contact elements 10c. In another example (not shown), the clipping feature 131 b may be provided with a resilient finger depending downwards towards the contact elements 10c and spanning the majority of the webbing aperture 1ca. The purpose of this resilient finger is to maintain a light pressure on the upper surface of the webbing, improving the contact between the conductive tracks in the webbing and the contact elements.

The unitary module 200 is assembled to the latch channel 1c by placing the main lip 131 into the webbing aperture 1 ca of the latch channel 1 c and pressing the latch channel 1c and unitary module 200 together, until the main lip 131 hooks over the lower edge of the periphery of the webbing aperture 1 ca. The latch channel 1 c and unitary module 200 are then slid relative to one another until the webbing apertures 1 ca, 200ca align. Upon alignment, the upper lip 131 b and lower lip 131 a engage with cooperating surfaces formed in or on the latch channel, thus forming a snap-fit with an audible click as the clipping features 131, 131a, 131b engage the latch channel 1c.

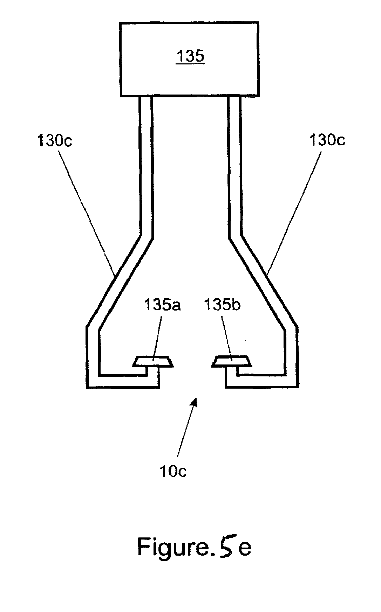

Figures 5c, 5d and 5e show three examples of the unitary module 200 in isolation from the insulating body. **Figure 5c** shows a side view of the buckle sensor 135, one of the conductors 20, and one of the contact elements 10c; with the insulating body 132 not shown for clarity. It may be seen from the Figure that there is an offset between the contact element 135a and the conductor 20, this offset allows the contact elements 10c to be positioned in the optimal location within the webbing aperture 1ca at the point where the webbing (not shown) passes therethrough. To provide this offset, a cranked or angled portion 130c of the conductor 20 (see Figures 5d and 5e) is used to accommodate the required change in orientation between the conductors 20 and the contact elements 10c to ensure that said contact elements 10c are optimally positioned within the webbing aperture 1 ca.

Figure 5d shows an example of a first conductor layout and Figure 5e shows an example of a second conductor layout in isolation from the insulating body 132 and buckle head 1 a of Figure 5a. In Figure 5d, the conductors 20 are arranged to run along one edge of the latch channel (not shown), permitting the electrical connections for the contact elements 10c to exit on the same side of the webbing aperture (not shown) before changing orientation via two angled portions 130c to connect to the latch sensor 135. The conductors 20 of the example shown in Figure 5e pass down each side of the latch channel (not shown), substantially surrounding the webbing aperture (not shown) before changing orientation via two angled portions 130c to connect to the latch sensor 135. The alternative conductor layouts shown in Figure 5d and Figure 5e highlight the flexibility in packaging provided by the present invention, allowing the vehicle manufacturer to adopt the seatbelt buckle assembly of the present invention as an upgrade or update to an existing vehicle seatbelt system.

Whichever layout of electrical conductors is used in the buckle head, the latch sensor 135 will produce a voltage across its terminals when the seat belt tongue is inserted into the buckle head. This voltage across contacts 135a and 135b in latch channel aperture 1 ca will be conducted to conductors 15a and 15b in webbing loop 15; and therefore to contacts 35a and 35b in the webbing aperture 3ca in the anchor bracket. These contacts in turn conduct the voltage to connector 30c or 30cc (Figure 6), which is connected to the vehicle wiring harness. The harness then conducts said voltage to the vehicle's Body Control Module (BCM - not shown); which will extinguish the vehicle's seat belt warning light when all vehicle occupants have buckled up. Connections may also be made to an Airbag Control Unit (ABU or ACU - not shown), in order to determine which airbags should be fired in the event of a vehicle collision. In some vehicles, the seat belt warning light function may be controlled by the ABU, instead of the BCM.

**Figure 6** shows a detailed perspective view of a contact assembly 30 in isolation from the anchor bracket 3. In the Figure, contact elements 35a and 35b are clearly visible, arranged to be held in contact with the surface of the webbing loop 15 whenever the seatbelt is in use, so as to contact conductive tracks 15a and 15b. If required, a simple resilient finger (not shown) may be added to the anchor bracket 3 (not shown in this Figure) to apply a light force to the webbing loop 15 to ensure that the conductive tracks in the surface of the webbing are held in contact with the corresponding contact elements 35a, 35b. In Figure 6, it should be noted that in contrast to the Figure 3 embodiment, where electrical connector 30c is on a fly lead, integral electrical connector 30cc is moulded in a fixed location relative to contact assembly 30; and therefore in a predictable location relative to anchor bracket 3.

A clipping feature 31 is formed by a lip along the upper and lower edges of a non-conductive insulating body 32. These lips provide a snap-fit around the periphery of the webbing aperture 3ca, formed in the anchor bracket 3; and hold the insulating body 32, and thus the contact elements 35a, 35b, to the anchor bracket 3 in use. The clipping feature 31 is provided with a low-friction surface arranged to be in contact with the webbing so as to keep abrasion of the webbing loop 15 to a minimum, in use. The insulating body 32 is arranged to electrically insulate the contact elements 35a, 35b from each other and from the anchor bracket 3.

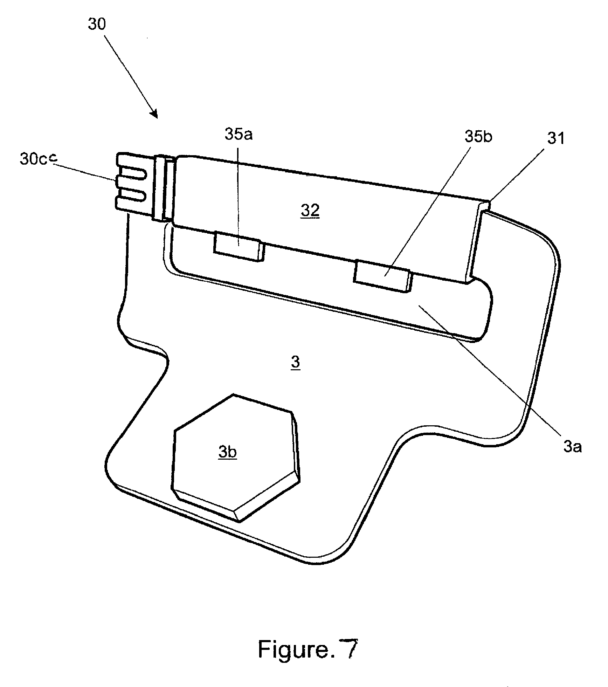

**Figure 7** shows a perspective view of contact assembly 30 fitted to anchor bracket 3. Once contact assemblies 30 and 130 are assembled, the contact elements 35a, 35b of the contact assembly 30 in the anchor bracket 3; and the contact elements 135a, 135b of contact assembly 130 in the latch channel 1c; are in contact, both electrically and physically, with the conductive tracks 15a, 15b in the webbing loop 15. In this way, the functionality of the sensor cable 6 of the known seatbelt buckle shown in Figure 2 is integrated into the webbing loop 15, negating the need for cable clips 6i, or for complicated stitching of the webbing loop 15. One advantage of this arrangement is that the latch sensor is electrically connected to the vehicle wiring harness via the integral harness connector 30cc; which rigidly presents the connector in a known location and orientation relative to the anchor bracket 3.

In an example (not shown), the integral harness connector 30cc is orientated towards the vehicle seat or floorpan 2 (Figures 1 and 2), and is arranged to automatically connect to the vehicle wiring harness as the anchor bracket 3 is secured to the vehicle seat or floorpan 2 during assembly. In this way, the assembly operator need only perform a single assembly operation of aligning the anchor bracket 3 with a corresponding mounting hole with one hand and tightening the anchor bolt 3b with the other hand. During this operation, the harness connector 30cc is aligned with a corresponding connector on the vehicle wiring harness when the anchor bracket is aligned with the mounting hole, and the harness connector 30cc makes electrical contact with the vehicle wiring harness as the anchor bolt 3b is tightened.

**Figure 8** shows a cross-sectional view through webbing loop 15, and the components which are enclosed within loop 15 in use. Loop 15 is shown in a "relaxed" state, with the seat belt (not shown) not fastened. Starting from the left side of the Figure, contact 35b on electrical contact assembly 30 is arranged adjacent to conductive track 15b. Assembly 30 is mounted on the upper side (in use) of anchor bracket 3. At the opposed, buckle head end of webbing loop 15, electrical contact assembly 130 is attached to the lower side (in use) of latch channel 1 c. Contact 135b is arranged adjacent to conductive track 15b on webbing loop 15. It should be noted that contacts 35b and 135b face away from each other.

When a user fastens the seat belt (not shown), the belt tongue (not shown) is pressed into the buckle head (1 a, Fig. 3), and locks into place as the belt tongue latches into the latch channel (1 c, Fig. 3). This will result in a tensile force T_{B} as the seat belt retractor (not shown) pulls the seat belt shoulder strap across the user's chest and the lap strap across the user's hips. Tensile force T_{B} will act to pull webbing loop 15 to the right of the Figure, but it will be constrained by contact with contact 35b. Hence, loop 15 will be pulled taut, and conductive track 15b will be in firm contact with contacts 135b and 35b. Anchor bracket 3 will be pulled upwards relative to its anchor bolt 3b, so by Newton's third law of motion, an equal and opposite force will result - a tensile force T_{A}, which will act to pull contact 35b into closer contact with conductive track 15b. Hence, contacts 35b and 135b will both be in firm contact with conductive track 15b (and likewise, contacts 35a and 135a with conductive track 15a on the far side of webbing loop 15).

This firm contact optimizes the reliability of the seat belt warning light signals, ensuring that the seat belt light will go out as soon as the seat belt is fastened. It can be seen from the Figure that contact 35b is mounted on the left side of anchor bracket 3, while contact 135b is mounted on the right side of latch channel 1c as drawn. Hence, the contacts are on distal - as opposed to proximal - sides of the anchor bracket and latch channel respectively.

In some known examples of seatbelt buckle assemblies, the apertures through which the webbing is passed are shaped so as to minimise friction and webbing abrasion in use; and to prevent bunching of the webbing in the aperture when the webbing is loaded. This function is often provided by a coined insert which is fitted into the aperture before the webbing is passed therethrough. In another example of the present invention (not shown), the contact assembly incorporates an integrated webbing aperture arranged to align with the webbing aperture 1 ca, 3ca of the latch channel 1c or anchor bracket 3 in use. This integrated webbing aperture is provided with a perimeter having a coined edge so as to combine the functionality of a coined insert with that of the contact assembly 30, 130 of the present invention. This provides the advantage that a separate coined insert is no longer required.

It is envisaged that the seatbelt buckle assembly of the present invention is not limited to use with a seatbelt reminder system but may, either additionally or alternatively, be used to supply power to energise a sensor or a light emitter for the release button 1 b located in the buckle head 1 a.

It will be appreciated by one skilled in the art that the function of one of the conductors may be performed by the metallic structure of the latch channel itself if required. Similarly, a plurality of contact elements may be used to perform a number of electrical functions such as personal entertainment connectivity or intercom functions.

Other advantages will be apparent to one skilled in the art and the present examples and embodiments are to be considered illustrative and not restrictive. The invention is not to be limited to the details given herein, but may be modified within the scope and equivalence of the appended claims.

## Claims

1. A seatbelt buckle assembly (10) for a seatbelt system for a vehicle, the seatbelt buckle assembly (10) comprising:
a buckle head (1 a) for accommodating at least a portion of a seatbelt tongue;
latching means, for selectively engaging said seatbelt tongue;
a buckle sensor (135) at least partly enclosed by the buckle head;
an anchor bracket (3); and
a woven webbing loop (15) for securing the buckle head (1a) to the anchor
bracket (3);
wherein the buckle sensor (135) is arranged to communicate electrically with said vehicle by an electrical connector (30c, 30cc) mounted to the anchor bracket (3) via at least one electrical conductor (15a, 15b) integrally woven through the webbing loop (15), and electrical contacts (135a, 135b, 35a, 35b) mounted on the buckle head (1a) and on the anchor bracket (3) respectively;
**characterized in that**:
said contacts (135a, 135b, 35a, 35b) are located and oriented so that a latching of the seatbelt tongue into the buckle head (1a), and a subsequent initial tensioning of the seatbelt, act to bring said contacts (135a, 135b, 35a, 35b) into alignment with, and contact with, the electrical conductors (15a, 15b).

2. A seatbelt buckle assembly (10) as claimed in claim 1, wherein the anchor bracket (3) is arranged to secure the seatbelt buckle assembly (10) to a load-bearing structure such as a vehicle body (2) or a vehicle seat.

3. A seatbelt buckle assembly (10) as claimed in claim 1 or claim 2, wherein the buckle head (1a) comprises a latch channel (1c) having an aperture (1ca) configured to cooperate with the webbing loop (15), said latching means being at least partly supported by the latch channel (1 c).

4. A seatbelt buckle assembly (10) according to claim 3, wherein the latch channel (1 c) is provided with a buckle electrical contact assembly (130) arranged to electrically connect the buckle sensor (135) to the at least one electrical conductor (15a, 15b) integrated into the webbing loop (15).

5. A seatbelt buckle assembly (10) according to claim 4, wherein the buckle electrical contact assembly (130) is supported by the aperture (1 ca) in the latch channel (1 c).

6. A seatbelt buckle assembly (10) as claimed in claim 4 or claim 5, wherein the buckle electrical contact assembly (130) is arranged to provide at least one surface with which to contact a portion (15e) of the webbing loop (15) in cooperation with said aperture (1ca).

7. A seatbelt buckle assembly (10) according to any of claims 2 to 6, wherein the anchor bracket (3) comprises:
an aperture (3ca) configured to cooperate with the webbing loop (15); and
a bracket electrical contact assembly (30).

8. A seatbelt buckle assembly (10) according to claim 7, wherein the bracket electrical contact assembly (30) is supported by the aperture (3ca) in the anchor bracket (3), and is arranged to provide at least one surface with which to contact a portion (15e) of the webbing loop (15) passing through said aperture (3ca).

9. A seatbelt buckle assembly (10) according to claim 7 or claim 8, wherein the bracket electrical contact assembly (30) comprises means for automatically connecting said contact assembly (30) to a vehicle wiring harness upon securing the anchor bracket (3) to a vehicle body (2) or seat.

10. A seatbelt buckle assembly (10) according to claim 9, wherein the means for electrically connecting the bracket electrical contact assembly (30) to a vehicle wiring harness comprises an electrical connector (30cc) integrally formed with said bracket electrical contact assembly (30).

11. A seatbelt buckle assembly (10) according to any preceding claim, wherein the latching means is configured to engage with a portion of said seatbelt tongue to restrain a vehicle occupant in use; and wherein the buckle sensor (135) is configured to detect the engagement of said seatbelt tongue with said latching means.

12. A seatbelt buckle assembly (10) according to any preceding claim, wherein the buckle sensor (135) is integrally formed with the buckle electrical contact assembly (130) in cooperation with the latch channel (1c).

13. A vehicle seatbelt system comprising a seatbelt buckle assembly (10) according to any of the preceding claims.

14. A vehicle seat comprising a seatbelt buckle assembly (10) according to any one of claims 1 to 12.

15. A vehicle comprising a seatbelt buckle assembly (10) according to any one of claims 1 to 12.

## Patentansprüche

1. Sitzgurtschlossanordnung (10) für ein Sitzgurtsystem für ein Fahrzeug, wobei die Sitzgurtschlossanordnung (10) Folgendes umfasst:
einen Schlosskopf (1a), um wenigstens einen Teil einer Sitzgurtzunge aufzunehmen;
Verriegelungsmittel, um selektiv in die Sitzgurtzunge einzugreifen;
einen Schlosssensor (135), der wenigstens zum Teil vom Schlosskopf eingeschlossen ist;
eine Verankerungshalterung (3); und
eine Gewebe-Gurtbandöse (15), um den Schlosskopf (1 a) in der Verankerungshalterung (3) zu sichern;
wobei der Schlosssensor (135) angeordnet ist, um über einen elektrischen Anschluss (30c, 30cc), der an der Verankerungshalterung (3) gelagert ist, über wenigstens einen elektrischen Leiter (15a, 15b), der fest mit der Gurtbandöse (15) verwoben ist, sowie über elektrische Kontakte (135a, 135b, 35a, 35b), die am Schlosskopf (1a) beziehungsweise an der Verankerungshalterung (3) gelagert sind, elektrisch mit dem Fahrzeug zu kommunizieren;
**dadurch gekennzeichnet, dass**:
die Kontakte (135a, 135b, 35a, 35b) so gelagert und ausgerichtet sind, dass ein Verriegeln der Sitzgurtzunge im Schlosskopf (1 a) und ein darauffolgendes erstes Spannen des Sitzgurts dazu führen, dass die Kontakte (135a, 135b, 35a, 35b) den elektrischen Leitern (15a, 15b) entsprechend ausgerichtet und mit diesen in Kontakt gebracht werden.

2. Sitzgurtschlossanordnung (10) nach Anspruch 1, wobei die Verankerungshalterung (3) angeordnet ist, um die Sitzgurtschlossanordnung (10) an einem tragenden Bauteil, wie der Fahrzeugkarosserie (2) oder einem Fahrzeugsitz zu sichern.

3. Sitzgurtschlossanordnung (10) nach Anspruch 1 oder 2, wobei der Schlosskopf (1 a) eine Verriegelungsführung (1 c) mit einer Öffnung (1 ca) aufweist, konfiguriert, um mit der Gurtbandöse (15) zusammenzuwirken, wobei die Verriegelungsmittel wenigstens teilweise von der Verriegelungsführung (1 c) getragen werden.

4. Sitzgurtschlossanordnung (10) nach Anspruch 3, wobei die Verriegelungsführung (1 c) eine Schlosselektrokontaktanordnung (130) aufweist, angeordnet, um den Schlosssensor (135) mit wenigstens einem elektrischen Leiter (15a, 15b), der in die Gurtbandöse (15) integriert ist, elektrisch zu verbinden.

5. Sitzgurtschlossanordnung (10) nach Anspruch 4, wobei die Schlosselektrokontaktanordnung (130) von der Öffnung (1ca) der Verriegelungsführung (1 c) getragen wird.

6. Sitzgurtschlossanordnung (10) nach Anspruch 4 oder 5, wobei die Schlosselektrokontaktanordnung (130) angeordnet ist, um wenigstens eine Oberfläche bereitzustellen, mit der ein Teil (15e) der Gurtbandöse (15) gemeinsam mit der Öffnung (1 ca) in Berührung kommen kann.

7. Sitzgurtschlossanordnung (10) nach einem der Ansprüche 2 bis 6, wobei die Verankerungshalterung (3) Folgendes umfasst:
eine Öffnung (3ca), konfiguriert, um mit der Gurtbandöse (15) zusammenzuwirken; und
eine Schlosselektrokontaktanordnung (30).

8. Sitzgurtschlossanordnung (10) nach Anspruch 7, wobei die Schlosselektrokontaktanordnung (30) von der Öffnung (3ca) in der Verankerungshalterung (3) getragen wird und angeordnet ist, um wenigstens eine Oberfläche bereitzustellen, mit der ein Teil (15e) der Gurtbandöse (15), die durch die Öffnung (3ca) läuft, in Berührung kommen kann.

9. Sitzgurtschlossanordnung (10) nach Anspruch 7 oder 8, wobei die Schlosselektrokontaktanordnung (30) Mittel umfasst, um die Kontaktanordnung (30) automatisch mit einem Fahrzeugkabelbaum zu verbinden, sobald die Verankerungshalterung (3) an einer Fahrzeugkarosserie (2) oder einem Sitz gesichert wird.

10. Sitzgurtschlossanordnung (10) nach Anspruch 9, wobei das Mittel zur elektrischen Verbindung der Schlosselektrokontaktanordnung (30) an einen Fahrzeugkabelbaum einen elektrischen Anschluss (30cc) aufweist, der mit der Schlosselektrokontaktanordnung (30) in einem Bauteil ausgeformt ist.

11. Sitzgurtschlossanordnung (10) nach einem der vorhergehenden Ansprüche, wobei das Verriegelungsmittel konfiguriert ist, um mit einem Teil der Sitzgurtzunge zusammenzuwirken, um im Gebrauch einen Fahrzeuginsassen zurückzuhalten; und wobei der Schlosssensor (135) konfiguriert ist, um das Zusammenwirken der Sitzgurtzunge mit dem Verriegelungsmittel zu erfassen.

12. Sitzgurtschlossanordnung (10) nach einem der vorherigen Ansprüche, wobei der Schlosssensor (135) mit der Schlosselektrokontaktanordnung (130) in Verbindung mit der Verriegelungsführung (1 c) in einem Bauteil ausgeformt ist.

13. Fahrzeugsitzgurtsystem, welches eine Sitzgurtschlossanordnung (10) nach einem der vorhergehenden Ansprüche umfasst.

14. Fahrzeugsitz, welcher eine Sitzgurtschlossanordnung (10) nach einem der Ansprüche 1 bis 12 umfasst.

15. Fahrzeug, welches eine Sitzgurtschlossanordnung (10) nach einem der Ansprüche 1 bis 12 umfasst.

## Revendications

1. Ensemble de boucle de ceinture de sécurité (10) pour un système de ceinture de sécurité d'un véhicule, l'ensemble de boucle de ceinture de sécurité (10) comprenant :
une tête de boucle (1a) permettant de loger au moins une partie d'une languette de sécurité ;
un moyen de verrouillage, permettant d'enclencher sélectivement ladite languette de ceinture de sécurité ;
un capteur de boucle (135) au moins en partie renfermé par la tête de boucle ;
une console d'ancrage (3) ; et
une boucle de sangle tissée (15) permettant de fixer la tête de boucle (1 a) à la console d'ancrage (3) ;
dans lequel le capteur de boucle (135) est conçu pour communiquer électriquement avec ledit véhicule par un connecteur électrique (30c, 30cc) monté sur la console d'ancrage (3) via au moins un conducteur électrique (15a, 15b) fixé solidairement à travers la boucle de sangle (15), et des contacts électriques (135a, 135b, 35a, 35b) montés sur la tête de boucle (1 a) et sur la console d'ancrage (3) respectivement ;
**caractérisé en ce que** :
lesdits contacts (135a, 135b, 35a, 35b) sont situés et orientés de sorte qu'un verrouillage de la languette de ceinture de sécurité dans la tête de boucle (1 a), et un tensionnement initial ultérieur de la ceinture de sécurité, servent à amener lesdits contacts (135a, 135b, 35a, 35b) en alignement et en contact avec les conducteurs électriques (15a, 15b).

2. Ensemble de boucle de ceinture de sécurité (10) selon la revendication 1, dans lequel la console d'ancrage (3) est conçue pour fixer l'ensemble de boucle de ceinture de sécurité (10) à une structure porteuse de charge telle qu'une carrosserie de véhicule (2) ou un siège de véhicule.

3. Ensemble de boucle de ceinture de sécurité (10) selon la revendication 1 ou la revendication 2, dans lequel la tête de boucle (1 a) comprend un canal verrou (1 c) ayant une ouverture (1 ca) configurée pour coopérer avec la boucle de sangle (15), ledit moyen de verrouillage étant au moins en partie supporté par le canal verrou (1 c).

4. Ensemble de boucle de ceinture de sécurité (10) selon la revendication 3, dans lequel le canal verrou (1 c) est pourvu d'un ensemble de contact électrique de boucle (130) conçu pour connecter électriquement le capteur de boucle (135) à au moins un conducteur électrique (15a, 15b) intégré dans la boucle de sangle (15).

5. Ensemble de boucle de ceinture de sécurité (10) selon la revendication 4, dans lequel l'ensemble de contact électrique de boucle (130) est supporté par l'ouverture (1 ca) dans le canal verrou (1 c).

6. Ensemble de boucle de ceinture de sécurité (10) selon la revendication 4 ou la revendication 5, dans lequel l'ensemble de contact électrique de boucle (130) est conçu pour fournir au moins une surface avec laquelle entrer en contact avec une partie (15e) de la boucle de sangle (15) en coopération avec ladite ouverture (1 ca).

7. Ensemble de boucle de ceinture de sécurité (10) selon l'une quelconque des revendications 2 à 6, dans lequel la console d'ancrage (3) comprend :
une ouverture (3ca) configurée pour coopérer avec la boucle de sangle (15) ; et
un ensemble de contact électrique de console (30).

8. Ensemble de boucle de ceinture de sécurité (10) selon la revendication 7, dans lequel l'ensemble de contact électrique de console (30) est supporté par l'ouverture (3ca) dans la console d'ancrage (3), et est conçu pour fournir au moins une surface avec laquelle entrer en contact avec une partie (15e) de la boucle de sangle (15) passant à travers ladite ouverture (3ca).

9. Ensemble de boucle de ceinture de sécurité (10) selon la revendication 7 ou la revendication 8, dans lequel l'ensemble de contact électrique de console (30) comprend un moyen de connexion automatique dudit ensemble de contact (30) à un faisceau de câblage de véhicule lors de la fixation de la console d'ancrage (3) à une carrosserie (2) ou un siège de véhicule.

10. Ensemble de boucle de ceinture de sécurité (10) selon la revendication 9, dans lequel le moyen de connexion électrique de l'ensemble de contact électrique de console (30) à un faisceau de câblage de véhicule comprend un connecteur électrique (30cc) formé solidairement avec ledit ensemble de contact électrique de console (30).

11. Ensemble de boucle de ceinture de sécurité (10) selon l'une quelconque des revendications précédentes, dans lequel le moyen de verrouillage est configuré pour s'enclencher avec une partie de ladite languette de ceinture de sécurité pour retenir un occupant de véhicule en utilisation ; et dans lequel le capteur de boucle (135) est configuré pour détecter l'enclenchement de ladite languette de ceinture de sécurité avec ledit moyen de verrouillage.

12. Ensemble de boucle de ceinture de sécurité (10) selon l'une quelconque des revendications précédentes, dans lequel le capteur de boucle (135) est formé solidairement avec l'ensemble de contact électrique de boucle (130) en coopération avec le canal verrou (1 c).

13. Système de ceinture de sécurité de véhicule comprenant un ensemble de boucle de ceinture de sécurité (10) selon l'une quelconque des revendications précédentes.

14. Siège de véhicule comprenant un ensemble de boucle de ceinture de sécurité (10) selon l'une quelconque des revendications 1 à 12.

15. Véhicule comprenant un ensemble de boucle de ceinture de sécurité (10) selon l'une quelconque des revendications 1 à 12.
